# EUROPÄISCHE PATENTSCHRIFT

(11) **EP 1 693 557 B1**
(45) Veröffentlichungstag und Bekanntmachung des Hinweises auf die Patenterteilung: **01.08.2012**
(21) Anmeldenummer: 05023608.2
(22) Anmeldetag: 28.10.2005
(51) Int. Cl.: F02B 27/02, F02M 35/116

(54) **Schaltbare Luftansauganlage für eine mehrzylindrige Brennkraftmaschine**
Variable air intake device for a multicylinder internal combustion engine
Dispositif d'admission d'air de commande pour un moteur à combustion interne multicylindre

(30) Priorität: 14.01.2005 DE 102005001862
(43) Veröffentlichungstag der Anmeldung: 23.08.2006
(73) Patentinhaber: Dr. Ing. h.c. F. Porsche AG, 70435 Stuttgart (DE)
(72) Erfinder: Könneker, Reinhard, 71297 Mönsheim (DE); Buck, Walter, 71638 Ludwigsburg (DE)

(56) Entgegenhaltungen:
- EP-A1- 0 769 608
- EP-A1- 1 353 052
- JP-A- 2004 239 255
- US-A- 5 048 471

## Beschreibung

Die Erfindung betrifft eine schaltbare Luftansauganlage für eine mehrzylindrige Brennkraftmaschine gemäß den Merkmalen des Oberbegriffs des Patentanspruchs 1.

So genannte Schaltsauganlagen zur Verbesserung der dynamischen Aufladung einer Brennkraftmaschine sind beispielsweise aus der DE 198 41 810 A1 oder DE 43 33 053 A1 bekannt. In der DE 43 33 053 A1 wird eine zweistufige Veränderung der Saugrohrlänge mit Hilfe eines Walzendrehschiebers erzeugt, der in Abhängigkeit von seiner Drehlage das kurze Ansaugrohr verschließt, während das lange Ansaugrohr geöffnet ist oder umgekehrt.

Aus der EP 1 353 052 A1 ist ein Luftansaugkanalsystem für Brennkraftmaschinen bekannt, das mehrere jeweils mindestens durch ein erstes und ein zweites Kanalteil ausgebildete Luftansaugkanäle aufweist. Ein gemeinsames Kanalteil, das zwei Luftansaugkanälen zugeordnet ist, weist zwei Lufteinlassöffnungen auf. Durch Schwenken des gemeinsamen Kanalteils kann die Länge der Luftansaugkanäle gemeinsam variiert werden.

Aufgabe der Erfindung ist es, für eine mehrreihige Brennkraftmaschine, insbesondere für einen Motor in V-Anordnung eine schaltbare Luftansauganlage zu entwickeln, die kompakt bauend und kostengünstig herstellbar ist.

Die Aufgabe wird durch die im Anspruch 1 angegebenen Merkmale gelöst. Bei der vorgeschlagenen erfindungsgemäßen Anordnung der Luftansauganlage für eine mehrreihige Brennkraftmaschine sind lediglich zwei Stellorgan-Einheiten für die Steuerung der beiden Saugrohrlängen erforderlich. Damit ergibt sich ein kompakter Aufbau der schaltbaren Luftansauganlage, die darüber hinaus kostengünstig herstellbar ist. Erfindungsgemäß ist ein Drehschieber vorgesehen, der in Abhängigkeit von seiner Drehlage jeweils das kurze Ansaugrohr freigibt, während das lange Ansaugrohr durch den Drehschieber verschlossen ist oder umgekehrt. Eine effektive Verschaltung für die Luftansauganlage ergibt sich, wenn das der ersten Zylinderbankreihe zugeordnete kurze Ansaugrohr und das der zweiten Zylinderbankreihe zugeordnete lange Ansaugrohr sich durchkreuzen und im Kreuzungsbereich der Drehschieber angeordnet ist, in dem ein Rohrabschnitt ausgebildet ist, der einen Teil des kurzen oder des langen Ansaugrohres bildet.

Die Luftansauganlage ist modulartig aufgebaut, wobei im Flanschbereich zum Zylinderkopf für die Steuerung der Luftzufuhr zu den einzelnen Zylindern pro Zylinder eine Drosselklappe vorgesehen ist.

Die Drosselklappen einer Zylinderbankreihe sind dabei gemeinsam durch jeweils ein Gestänge betätigbar. Weiterhin sind im Flanschbereich zum Zylinderkopf im Modul der Luftansauganlage Öffnungen vorgesehen, die zur Aufnahme von Einspritzventilen dienen.

Ein Ausführungsbeispiel der Erfindung ist in der nachfolgenden Beschreibung und Zeichnung näher erläutert.

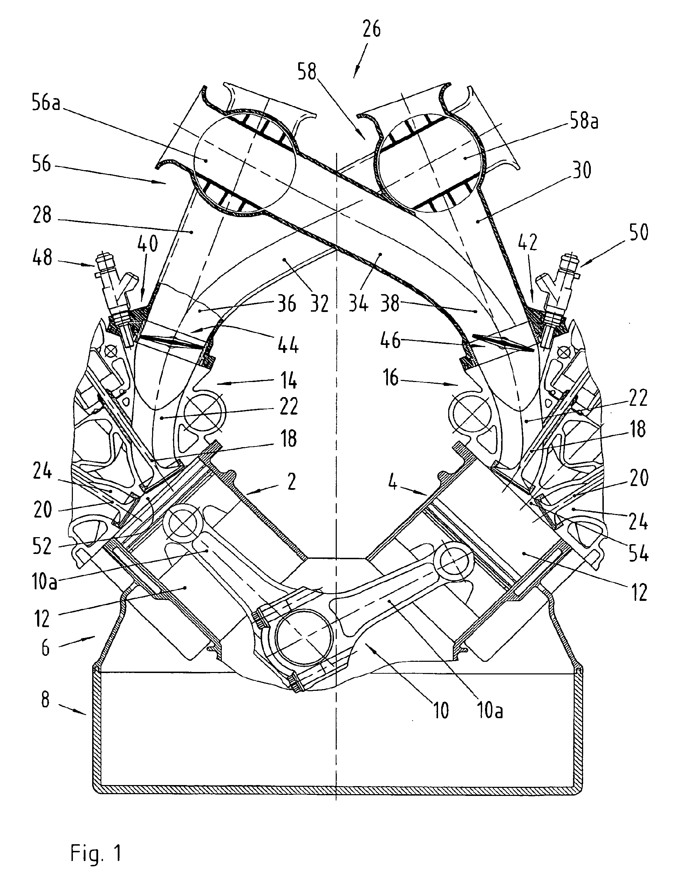

Die einzige Figur zeigt ausschnittsweise eine Brennkraftmaschine mit einer schaltbaren Luftansauganlage.

Eine mehrzylindrige Brennkraftmaschine, im vorliegenden Ausführungsbeispiel als V8-Motor ausgebildet, weist zwei gegenüberliegende Zylinderbankreihen 2 und 4 auf. Die beiden Zylinderbankreihen 2 und 4 sind in einem Kurbelgehäuseoberteil 6 integriert, an das sich ein als Kurbelwellenlagerbrücke ausgebildetes Kurbelgehäuseunterteil 8 anschließt. Zwischen dem Kurbelgehäuseoberteil 6 und dem Kurbelgehäuseunterteil 8 ist eine Kurbelwelle 10 gelagert, die über ihre Pleuelstangen 10a mit den in den Zylindern geführten Kolben 12 verbunden ist.

Die beiden Zylinderbankreihen 2 und 4 weisen weiterhin zwei Zylinderköpfe 14 und 16 auf, in denen unter anderem die durch Ein- und Auslassventile 18 und 20 steuerbaren Ein-und Auslasskanäle 22 und 24 ausgebildet sind.

An den beiden Zylinderköpfen 14 und 16 ist ein Luftansaugmodul 26 befestigt, über das die Luftzufuhr zu den einzelnen Zylindern gesteuert ist. Das Luftansaugmodul 26 weist pro Zylinderbankreihe 2, 4 jeweils vier kurze Ansaugrohre 28 und 30 sowie zwei lange Ansaugrohre 32 und 34 auf, von denen in der Zeichnung jeweils nur das kurze und lange Ansaugrohr 28, 30 bzw. 32, 34 eines Zylinders der beiden Zylinderbankreihen 2 und 4 erkennbar bzw. dargestellt ist. Die den beiden Zylinderköpfen 14, 16 jeweils zugeordneten kurzen und langen Ansaugrohre 28, 32 bzw. 30, 34 sind jeweils einteilig ausgeführt und weisen einen gemeinsamen Rohrabschnitt 36 und 38 auf. Das den beiden Zylinderköpfen 14, 16 zugeordnete Ende des gemeinsamen Rohrabschnittes 36 bzw. 38 ist in jeweils einem Flansch 40 und 42 aufgenommen, der sich jeweils über die vier Zylinder des V8-Motors erstreckt und zur Befestigung des Luftansaugmoduls 26 an den beiden Zylinderköpfen 14 und 16 vorgesehen ist. Im gemeinsamen Rohrabschnitt 36, 38 ist pro Zylinder jeweils eine Drosselklappe 44 und 46 vorgesehen, die auf einer gemeinsamen Achse zur Steuerung der Luftzufuhr zu den Zylindern drehbar gelagert sind. In den beiden Flanschen 40 und 42 sind weiterhin jeweils vier Öffnungen vorgesehen, die der Aufnahme von jeweils vier Einspritzventilen 48 und 50 dienen. Die Einspritzventile 48, 50 sorgen auf bekannte Art und Weise dafür, dass - im vorliegenden Fall der Saugrohreinspritzung - über die in den Zylinderköpfen 14, 16 integrierten Einlasskanäle 22 den Brennräumen 52 und 54 Kraftstoff zuführbar wird.

Wie aus der Zeichnung ersichtlich, sind die kurzen und langen Ansaugrohre 28, 32 bzw. 30, 34 so zueinander angeordnet bzw. ausgerichtet, dass sich die kurzen Ansaugrohre 28 bzw. 30 der einen Zylinderbankreihe mit den langen Ansaugrohren 32, 34 im Mündungsbereich jeweils durchkreuzen. Dort wo die kurzen Ansaugrohre 28, 30 die langen Ansaugrohre 32, 34 durchkreuzen, ist jeweils ein Drehschieber 56 und 58 vorgesehen, in denen jeweils ein mit dem Innendurchmesser des kurzen und langen Ansaugrohres 28, 34 bzw. 30 und 32 übereinstimmender Rohrabschnitt 56a bzw. 58a ausgebildet ist. In Abhängigkeit von seiner Drehlage gibt der Drehschieber 56, 58 den Kanal des kurzen Ansaugrohres 28 bzw. 30 frei, während die langen Ansaugrohre 32 bzw. 34 bzw. geschlossen sind oder umgekehrt.

Bei der in der Zeichnung dargestellten Stellung beider Drehschieber 56, 58 ist jeweils das lange Ansaugrohr 32 und 34 geöffnet, während die kurzen Ansaugrohre 28 und 30 geschlossen sind.

Wie bekannt ist, wird durch die geeignete Wahl der Ansaugrohrlänge die Gasschwingung so beeinflusst, dass die Druckwelle durch die geöffneten Einlassventile läuft und eine bessere Füllung bewirkt. Im unteren Drehzahlbereich sind dabei die langen Ansaugrohre 32, 34 geöffnet, während bei hohen Drehzahlen über die Drehschieber 56 und 58 die langen Ansaugrohre 32 und 34 verschlossen und die kurzen Ansaugrohre 28 und 30 geöffnet sind.

Das zuvor beschriebene Luftansaugmodul 26 ist durch eine entsprechende Variation der Anzahl der Ansaugrohre 28 bis 34 insbesondere auch für V-Motoren mit zwei, sechs, zehn oder zwölf Zylindern geeignet.

## Patentansprüche

1. Schaltbare Luftansauganlage für eine mehrzylindrige Brennkraftmaschine mit mindestens einem kurzen und einem langen Ansaugrohr (28 bis 34), deren Querschnitte über mindestens ein Stellorgan (56, 58) in Abhängigkeit von Betriebsparametern, insbesondere der Drehzahl der Brennkraftmaschine steuerbar sind, wobei das kurze Ansaugrohr (28, 30) für eine erste Zylinderbankreihe (2) und das lange Ansaugrohr (32, 34) für eine zweite Zylinderbankreihe (4) der Brennkraftmaschine über ein gemeinsames Stellorgan (56, 58) steuerbar sind, **dadurch gekennzeichnet, dass** das gemeinsame Stellorgan als Drehschieber (56, 58) ausgebildet ist, wobei sich jeweils das der ersten Zylinderbankreihe (2) zugeordnete kurze Ansaugrohr (28) und das der zweiten Zylinderbankreihe (4) zugeordnete lange Ansaugrohr (34) durchkreuzen, wobei im Kreuzungsbereich der gemeinsame Drehschieber (56, 58) angeordnet ist, dergestalt, dass je nach Stellung des Drehschiebers (56, 58) die kurzen Ansaugrohre (28, 30) beider Zylinderbankreihen (2, 4) geöffnet sind, während die langen Ansaugrohre (32, 34) beider Zylinderbankreihen (2, 4) geschlossen sind oder umgekehrt.

2. Schaltbare Luftansauganlage nach Anspruch 1, **dadurch gekennzeichnet, dass** die Luftansauganlage als Modul (26) ausgebildet ist, in dem im Flanschbereich (40, 42) zum Zylinderkopf (14, 16) Drosselklappen (44, 46) für die Steuerung der Luftzufuhr zu den Zylindern vorgesehen sind.

3. Schaltbare Luftansauganlage nach Anspruch 2, **dadurch gekennzeichnet, dass** die Drosselklappen (44, 46) einer Zylinderbankreihe (2, 4) auf einer Achse gelagert und damit gemeinsam betätigbar sind.

4. Schaltbare Luftansauganlage nach Anspruch 2 oder 3, **dadurch gekennzeichnet, dass** im Flanschbereich (40, 42) zum Zylinderkopf (14, 16) im Luftansaugmodul (26) Öffnungen für die Aufnahme von Einspritzventilen (48, 50) vorgesehen sind.

## Claims

1. Switchable air intake system for a multi-cylinder internal combustion engine, having at least one short and one long intake pipe (28 to 34), the cross sections of which can be controlled by means of at least one actuating element (56, 58) as a function of operating parameters, in particular the rotational speed of the internal combustion engine, wherein the short intake pipe (28, 30) for a first cylinder bank row (2) and the long intake pipe (32, 34) for a second cylinder bank row (4) of the internal combustion engine can be controlled by means of a common actuating element (56, 58), **characterized in that** the common actuating element is in the form of a rotary slide valve (56, 58), wherein in each case the short intake pipe (28) assigned to the first cylinder bank row (2) and the long intake pipe (34) assigned to the second cylinder bank row (4) intersect, wherein the common rotary slide valve (56, 58) is arranged in the intersection region such that, depending on the position of the rotary slide valve (56, 58), the short intake pipes (28, 30) of both cylinder bank rows (2, 4) are opened while the long intake pipes (32, 34) of both cylinder bank rows (2, 4) are closed, or vice versa.

2. Switchable air intake system according to Claim 1, **characterized in that** the air intake system is in the form of a module (26) in which throttle flaps (44, 46) for controlling the supply of air to the cylinders are provided in the flange region (40, 42) for mounting on the cylinder head (14, 16).

3. Switchable air intake system according to Claim 2, **characterized in that** the throttle flaps (44, 46) of one cylinder bank row (2, 4) are mounted on one shaft and can thus be actuated conjointly.

4. Switchable air intake system according to Claim 2 or 3, **characterized in that** openings for receiving injection valves (48, 50) are provided in the air intake module (26) in the flange region (40, 42) for mounting on the cylinder head (14, 16).

## Revendications

1. Dispositif d'admission d'air commutable pour un moteur à combustion interne multicylindre, comprenant au moins un tuyau d'admission court et au moins un tuyau d'admission long (28 à 34) dont les sections transversales peuvent être commandées, au moyen d'au moins un organe de réglage (56, 58), en fonction de paramètres de fonctionnement, en particulier le régime du moteur à combustion interne, le tuyau d'admission court (28, 30) pour une première rangée de cylindres (2) et le tuyau d'admission long (32, 34) pour une deuxième rangée de cylindres (4) du moteur à combustion interne pouvant être commandés au moyen d'un organe de réglage (56, 58) commun, **caractérisé en ce que** l'organe de réglage commun est réalisé sous forme de tiroir rotatif (56, 58), le tuyau d'admission court (28) respectif associé à la première rangée de cylindres (2) et le tuyau d'admission long (34) associé à la deuxième rangée de cylindres (4) se croisant, le tiroir rotatif (56, 58) commun étant disposé dans la zone de croisement, de telle sorte qu'en fonction de la position du tiroir rotatif (56, 58), les tuyaux d'admission courts (28, 30) des deux rangées de cylindres (2, 4) soient ouverts, tandis que les tuyaux d'admission longs (32, 34) des deux rangées de cylindres (2, 4) sont fermés ou inversement.

2. Dispositif d'admission d'air commutable selon la revendication 1, **caractérisé en ce que** le dispositif d'admission d'air est réalisé sous forme de module (26) dans lequel des papillons d'étranglement (44, 46) sont prévus dans la zone de bride (40, 42) vers la tête de cylindre (14, 16) pour la commande de l'alimentation en air des cylindres.

3. Dispositif d'admission d'air commutable selon la revendication 2, **caractérisé en ce que** les papillons d'étranglement (44, 46) d'une rangée de cylindres (2, 4) sont montés sur un axe et peuvent ainsi être actionnés conjointement.

4. Dispositif d'admission d'air commutable selon la revendication 2 ou 3, **caractérisé en ce que** des ouvertures pour la réception de soupapes d'injection (48, 50) sont prévues dans la zone de bride (40, 42) vers la tête de cylindre (14, 16) dans le module d'admission d'air (26).
